# EUROPEAN PATENT APPLICATION

(11) **EP 1 026 605 A1**
(43) Date of publication of application: **09.08.2000**
(21) Application number: 99200322.8
(22) Date of filing: 04.02.1999
(51) Int. Cl.: G06F 17/30, G06F 17/60

(54) **Method for publishing numerical data in a computer network and method for representing numerical data items in an application object**

(71) Applicant: van Brummen, John, 1054 ZV Amsterdam (NL)
(72) Inventor: van Brummen, John, 1054 ZV Amsterdam (NL)
(74) Representative: de Vries, Johannes Hendrik Fokke

(57) **Abstract**

In a method for publishing numerical data in a computer network, a numerical data server offers a plurality of numerical data items which can be obtained through the network. A unique address (UA) is assigned to each data item, which provides a hyperlink with the numerical data server. Instead of the numerical data items the UA is distributed through the network. In an application object, such as a web page, a document, a database, a spreadsheet or the like, in a computer which can be connected to a computer network, a numerical data item is represented by a hyperlink to a numerical data server. A server or client is adapted to retrieve the associated numerical data item from the numerical data server through the network when using the application object.

## Description

The invention relates to a method for publishing numerical data in a computer network, wherein a numerical data server offers a plurality of numerical data items which can be obtained through the network. The invention further relates to a method for representing numerical data items in an application object, such as a web page, a document, a database, a spreadsheet or the like, in a computer which can be connected to a computer network, the network comprising a plurality of servers and clients, at least one of the servers operating as a numerical data server.

A well-known global network of computers is the Internet, wherein the computers communicate through the standard TCP/IP protocol. The World Wide Web (WWW) is the driving force behind the exponential growth of the Internet. Generally, the computers at the users side are known as "clients", while other computers in the network, such as computers providing web pages, computers connecting the clients to the network, are known as "servers", for example web servers, proxy servers etc. The Internet technology is also applied within corporate environments, in which case the network is known as intranet. Corporations having their intranet can extend subsets of their corporate data to the outside world through the corporate extranet. The standard for the representation of textual data is the Hyper Text Markup Language (HTML). The related Hyper Text Transmission Protocol (HTTP) has become the WWW's communication standard. The exponential growth of all these interconnected networks has created some problems regarding the content available on the network. One of these problems is that there is no guarantee that numerical data embedded in the content, such as a web page, is accurate or consistent in all copies of the same content existing throughout the network.

The present invention aims to provide a method of the above-mentioned type, wherein it is guaranteed that numerical data in a computer network is always accurate and consistent in any of the computers connected to the network.

According to the invention a method for publishing numerical data in a computer network of the above-mentioned type is provided, characterized in that a unique address (UA) is assigned to each data item, said UA providing a hyperlink to the numerical data server, wherein the UA is distributed through the network.

In the method of the invention a numerical data item is represented by a unique address, wherein this address is embedded in the content in which the numerical data item is used. If, for example at a client the content is rendered, for example by means of a browser, the unique address is used by the browser to obtain the numerical data item from the numerical data server. In this manner it is guaranteed that the numerical data item displayed or used in another manner, is accurate and consistent in any application object in which the numerical data item is used.

The invention further provides a method for representing numerical data items in an application object of the above-mentioned type, the method according to the invention being characterized in that a numerical data item is represented by a hyperlink to a numerical data server, wherein a server or client is adapted to obtain the associated numerical data item from the numerical data server through the network when opening the application object.

The invention will be further explained by reference to the drawings.

Fig. 1 schematically shows a computer network, in which an embodiment of the methods of the invention is implemented.

Fig. 2 shows a diagram illustrating the method of the invention.

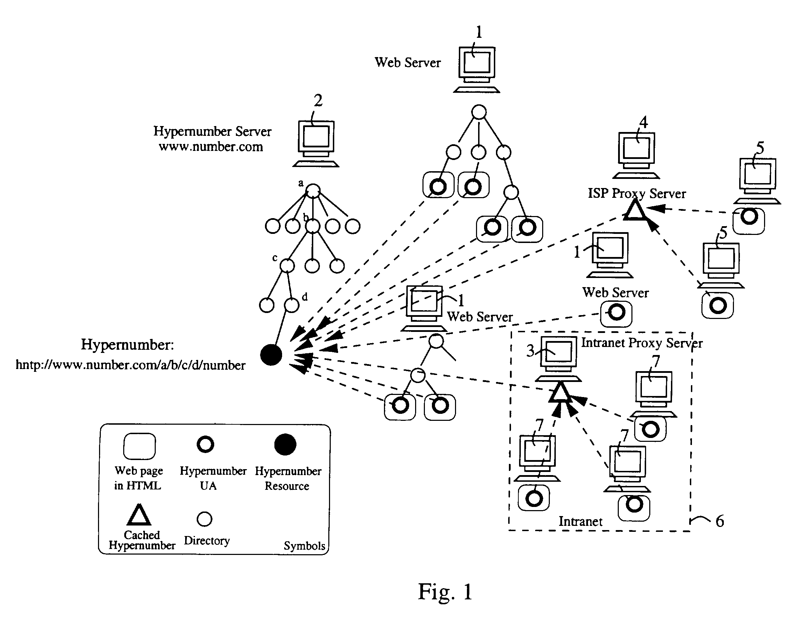

Fig. 1 schematically shows a part of a global computer network. Fig. 1 further comprises an explanation of the symbols used. The network comprises a plurality of web servers 1, a numerical data server 2 and two proxy servers 3,4. The proxy server 4 is located at an Internet service provider and a number of clients 5 are connected to this proxy server 4. The proxy server 3 is part of a corporate intranet 6 schematically indicated by a dashed line and a number of clients 7 are included in the corporate intranet 6 and communicate with the proxy server 3.

The numerical data server 2 publishes numerical data items which can be obtained throughout the network and any intranet 6 connected to the network. In the prior art the numerical data item itself is embedded in the web content, such as a web page and in this manner a number of copies of the web content with the data item may exist. In the prior art it is impossible to guarantee that the numerical data item in the web content is up-to-date. In the method of the invention, instead of embedding the data item itself in a web page, a unique address UA providing a hyperlink is embedded in the web pages where the numerical data item involved is used. This unique address UA is composed of a service identification, a server name, optionally a directory path and the name of the data item. The structure of this unique address is mainly the same as a unique resource locator (URL) or more generally a unique resource name (URN). Hereinafter the numerical data item will be referred to as hypernumber, a trade name of the applicant. The hypernumber UA is schematically indicated in fig. 1 and provides a link to the hypernumber server 2 as indicated by the dashed arrows. In fig. 1 only one hypernumber is shown by way of example. It will be clear that generally a hypernumber server will publish many hypernumbers.

This means that the hypernumber is addressed through its UA that comprises access methods like Uniform Resource Locator (URL), Uniform Resource Name (URN), and any possible future addressing and naming schemes. The UA combines unique names for transportation protocol, server, directory, and resource in the following manner:
hntp://server/directory/resource[index]
The resource name can have an optional suffix '.hn'. The term 'hntp' stands for Hypernumber Transmission Protocol. The term '[index]' specifies the hypernumber index and is optional as will be explained hereinafter. Standardisation of the hypernumber access method is extremely important to achieve global ubiquity and wide distribution.

As only the hypernumber UA is distributed through the network as shown in fig. 1, it is guaranteed that in any application object in which the hypernumber is used, i.e. in web pages, documents, spreadsheets, data bases or the like, the actual numerical data item used will always be up-to-date with its latest value.

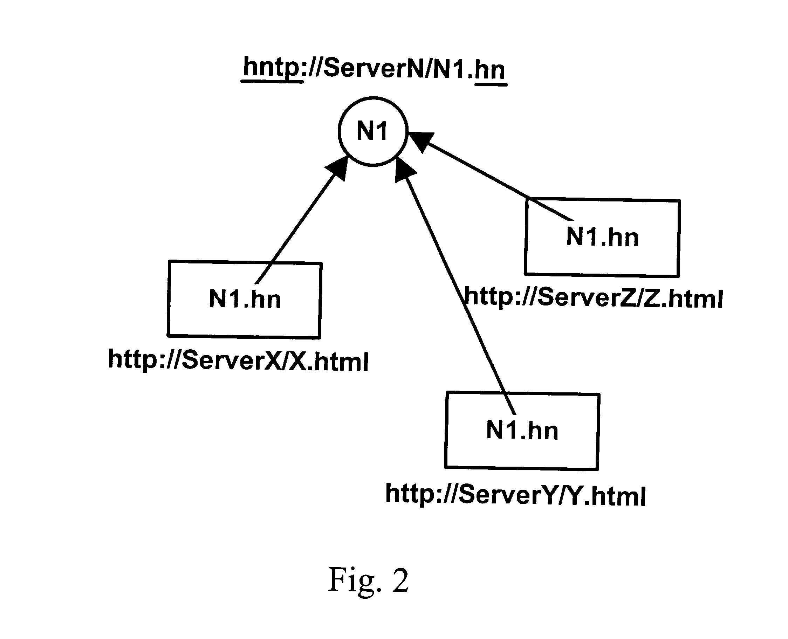

If, for example, the file is rendered by a browser the actual value of the hypernumber will be obtained via the network from the server 2 or a proxy server 3,4 where the hypernumber is cached. Fig. 2 shows as an example three web servers having a web page in which a hypernumber N1 is embedded. If the web page is cached in the web server, generally both the hyperlink and the actual value of the hypernumber will be cached. When the web page is used, the hyperlink embedded in the web page provides the address where the actual value can be obtained as indicated by the arrows.

According to the method described, a time index can be added to the hypernumber UA, which time index fixes the hypernumber in time. The time index is an optional integrated part of the hypernumber UA and can have different representations. The full base representation is [DD/MM/YYYY, hh:mm:ss, zone]. In this representation DD/MM/YYYY represents the date, hh:mm:ss represents the time of the day and zone represents the time-zone. Of course, other representations of the time index are possible.

As a general explanation of indexing it is noted that in this context indexing relates to time indexing of volatile numerical data items or objects, that change their value over time. Depending on the application of the data item one needs either its most up-to-date value or its historic value at a certain moment of time. The index evaluates to one or more moments in time. The index evaluates to moments in the past, moment in the present, moments in the future, or any combination of these. An index is default represented in the local time of the object publisher. It can also be represented in GMT or any other time-zone through its zone sub-index. In order to synchronise publisher and consumer the index semantics have been designed to allow for loose synchronisation. This entails that consumers don't have to know the exact moment of object publication in order to be able to correctly index the object and retrieve it. The matching semantics are such that a consumer makes a request for the publisher's most up-to-date value at the consumer's specified moment of time. Depending on the frequency of publication this could be any number of seconds, minutes, hours, days, months, or even years before the consumer's indicated instance of time. These semantics allow for consumer/publisher time synchronisation over a global computer network like e.g. the World Wide Web. Generally the following index possibilities exist:
No Index: Most up-to-date value of the object. Index re-evaluates to new time index value when object's lifetime expires. Empty index [] is equivalent to specifying no index.
Precise Index: The sub-indices are specified to the extent that the denoted time interval leads to one instance of a hypernumber value. This value is called a historic value and remains constant over time. The required precision of the index in terms of required sub-index resolution depends on the object's publishing frequency. This frequency directly relates to the object's lifetime. Partial Index: The sub-indices are specified to the extent that the denoted index leads to more instances of time. At any moment of time the most recent instant of time that matches the partial index is taken as partial index value. This can be constant because it matches in the past, or it can be variable because it matches in the present. For example:
index [20/*Mar*/1960] evaluates to index [20/*Mar*/1960, 24:00] because that is the most up-to-date value for that day, but index [20/*Mar*/] will evaluate to
(1) most up-to-date instance of [20/*Mar*/1999] on March 20th 1999,
(2) [20/*Mar*/1999, 24:00] during March 21st 1999 until and including March 19th 2000,
(3) most up-to-date instance of [20/*Mar*/2000] on March 20th 2000,
(4) [20/*Mar*/2000, 24:00] during March 21st 2000 until and including March 19th 2001,
(5) and this continues likewise for 2001, 2002, and further.
Numbered Index: One or more sub-indices contain numbers denoting year, month of year, day of month, hour of day, minute of hour, second of minute, or time offset from GMT.
Symbolic Index: One or more sub-indices contain symbolic names to identify certain sub-index numbers. Example are: *Jan, Feb, Mar*,..., *Dec* for the month-of-year sub-index, or *WET* for the Western European Time-zone. This makes the sub-index more verbose.
Ranged Index: One or more sub-indices contains an expression *x*-*y* denoting a range of values *x*, *x*+1,..., *y*-1,*y*, in which *x*<*y*. This allows one to address index ranges within the sub-index number domain. Sequenced Index: One or more sub-indices contain a number sequence *x*_{*1*}, *x*₂,..., *x*_{*n*} in which *x*₁<*x*₂<...<*x*_{*n*} which evaluates to a time ordered sequence of sub-index values within the sub-index number domain.
Iterated Index: One or more sub-indices contain an iterator. An iterator can be an asterisk (*) that iterates over the sub-index (*si*) entire ordered value range *Min*_{*si*}*, Min*_{*si*}+1,..., *Max*_{*si*}-1*, Max*_{*si*}*.* This allows one for example to address all days within a month, or all minutes within an hour, or all minutes within a day by using an hour and minute sub-index asterisk. The iterator can also be a symbolic name like *Mon, Tue, Wed,..., Sun* for the day-of-month sub-index. This allows one to address all Fridays within a month without the need to know their exact dates.
Relative Index: One or more sub-indices contain a positive or negative value denoting a relative sub-index value. The offset is always evaluated relatively to the current value of the sub-index in time. This denotes a constant shift in time. A relative index allows one for example to publish objects with a 15-minute time delay by specifying a [:-15:] index.

A numerical data item index can combine a numbered, symbolic, ranged, sequenced, iterated, and relative index in any possible combination. The resulting index will either be precise or partial. A partial index in the present will evaluate to new index values over time. A ranged, sequenced or iterated index evaluates to a number of time ordered objects. In case of hypernumber objects this result is collectively called a hypernumber array.

From the above general explanation it will be understood that if, for example, the hypernumber UA has no time index, rendering the application object at a client 5,7 will result in the last updated value being retrieved from the hypernumber server 2. If a specified time index is added to the hypernumber UA, the corresponding constant historic value of the numerical data item will be retrieved.

Hypernumbers are not static. They remain passive when not used/rendered or during the value's life time. In addition hypernumbers can be made active by using sub-index defaults in the time index added to the UA. For example, the time index [:0:0] will instruct the hypernumber to update itself every hour at 0 seconds and 0 minutes. In this manner a dynamic hypernumber is obtained that refreshes itself at predetermined intervals. Further advantage of the use of such dynamic hypernumbers is that the publisher of the numerical data can balance the load on its hypernumber server 2 due to refresh requests by spreading out the requests over an interval range. This allows for up-to-date published content with predetermined refresh rates and load-balancing the requests resulting from this published content with dynamic hypernumbers. Further service providers can differentiate service levels for their clients by differentiating refresh rates or by using a time delay sub-index as described.

Further, a time index provides the possibility to obtain an array of hypernumber values, for example to determine the trend over time and to apply statistical and correlation analysis between data. A hypernumber UA refers to an array of values by using any combination of a ranged, sequenced, or iterated index.

It will be clear that the method described allows a client or server to add a time index to the UA to retrieve a desired single value or an array of values.

In a further embodiment of the method described, a so-called type attribute is added to the hypernumber, wherein this type attribute provides type information on the hypernumber. Hypernumbers can be typed with basic types, arithmetic types, composite types, or overloaded types. Typing the hypernumbers in this manner provides the possibility to guarantee data integrity in large distributed computer networks. The following type categories could be used for example:
Basic Types: The type system allows representation of hypernumber types that relate to real life units such as for example currency, distance, temperature, time, quantity, or any other basic type unit. The hypernumber type can be chosen to be more or less abstract depending on how much type checking the hypernumber publisher aims to enforce.
Arithmetic Types: The type system allows representation of more complex arithmetic types that reflect arithmetic operations such as for example: area, volume, price per square meter, price including VAT, concentration per volume, exchange rate of one currency to another, or any other type of formula. During calculations arithmetic operations are type checked against the types of the operator's operands. In this way integrity of numeric calculations is greatly enhanced and enforced. The arithmetic operator obtains a new type that correctly reflects the result of its numeric operation. For example, it will become impossible to select a wrong exchange rate, to add two prices with and without VAT, or to wrongly add VAT twice to a hypernumber.
Composite Types: The type system allows for type composition that can be used to represent hypernumber types that are composed of multiple numeric sub-types. A standard composite preconfigured type is the time index (day/month/year hour:min:sec zone). Date and time are composite sub-types of time index. Composite types have a domain range associated with every sub-type. The predefined types respect the international calendar, time-zones, and day light saving. Composite types come with arithmetic operations that correctly handle overflow within one sub-type and exporting the overflow carry to the next sub-type. For example: '10:59' of type 'hour:min' added to '1' of type 'min' evaluates correctly to '11:00'. Composite types allow arithmetic on any type of its sub-types. For example, one can either add minutes or seconds to a composite type 'hour:min'. Besides the predefined types the hypernumber publishers can specify their own composite types.
Overloaded Types: The type system allows for type overloading that can associate one hypernumber with multiple types. For every type the hypernumber has its own type-specific numeric value. Arithmetic operations or explicit type casts automatically select the appropriate type and obtain the related numeric value. This allows hypernumber publishers to keep the hypernumber name space clean and to rather diversify in type overloading. For example: all USD exchange rates could be represented with one hypernumber overloaded with a multitude of types for the different cross-rates; this overloaded type would combine the following arithmetic types USD/EUR, USD/YEN, USD/GBP, and more.

Hypernumbers and their related calculations are defined in a so-called Hypernumber Dataflow Language (HNDL). HNDL is appropriately tagged and can be embedded in content of any textual or numeric application, be it a HTML web page, spreadsheet, document, diary, schedule, database, or any other application category.

HNDL is a data flow language in which data dependencies of calculations are expressed. It is not a statement orientated sequential programming language. HNDL has been designed to construct a Directed Acyclic Graph (DAG) that allows any arithmetic operation to be re-evaluated if and when one or more of its hypernumber operands is updated with a new value. In this way arithmetic calculation are guaranteed to be and remain consistent. The DAG contains for every operand and every arithmetic operation a node. Direct operand dependencies are denoted by directed arcs from operand node to operator node. DAGs can be split between multiple distinctive HNDL fragments. They are glued together by defining and referring to so-called node labels.

HNDL as data flow language allows straightforward representation of a spreadsheet's two-dimensional grid. This enables spreadsheet applications to export spreadsheets as a mixture of HTML and HNDL to the WWW. Vice versa, the object orientated nature of hypernumbers allows drag-and-drop functionality from web page into spreadsheet cell. In this way hypernumbers solve the spreadsheet update problem once spreadsheets get distributed over computer networks.

Therefore, the use of hypernumbers provides the possibility to create a spreadsheet or data base, for example, wherein instead of actual numerical data, hypernumbers are embedded, wherein the thus created spreadsheet or data base is translated into a HTML document with embedded HNDL which can be published on the global computer network, corporate intranet or corporate extranet. Any client rendering the spreadsheet or data base will automatically receive the up-to-date hypernumbers from the hypernumber server.

The security of hypernumbers should be guaranteed as hypernumbers will be distributed through both paid subscriptions and public global computer networks like the World Wide Web to a mass audience. Hypernumber privacy can be guaranteed by state-of-the-art encryption of hypernumber content. The hypernumber name space can be chosen to remain either visible or invisible. Hypernumber publisher authenticity can be guaranteed through the inclusion of a state-of-the-art digital signature uniquely identifying the publisher. The digital signature contains a watermark that can be used to communicate publisher brand and authenticity to the consumer in a visual manner. Hypernumber content correctness is guaranteed by the inclusion of a state-of-the-art encrypted digital digest. This protects one against malicious or accidental content corruption during transportation over the computer network.

Accuracy of hypernumbers is preferably achieved by adding a time stamp to each hypernumber with its time-of-birth and its associated lifetime. A proxy server caching the web content including hypernumbers, can check the lifetime and automatically refresh the hypernumbers when necessary.

The distribution and maintenance of hypernumbers over global computer networks like the Internet and the World Wide Web require the existence of a dedicated Hypernumber Transmission Protocol identified as 'hntp'. This protocol will be fully compatible and interoperable with state-of-the-art World Wide Web protocols such as HTTP (Hypertext Transmission Protocol) and state-of-the-art Internet protocols like TCP/IP and IP-NG (TCP/IP Next Generation).

As shown in fig. 1, a web page with the embedded hypernumber is cached at the proxy servers 3,4. Preferably the actual value will also be cached, so that when the web page is retrieved by a client 5 or 7, the actual value is available without the necessity to make a connection to the hypernumber server 2. The proxy servers 3,4 can retrieve a new actual value if the life time shows that the value has become stale.

It is noted that network should be understood as any data distribution facility, including computer networks and broadcasting or multicasting networks. Further it will be understood that the numerical data items addressed by the UA of the hypernumber can be temporarily or permanently cached in the client computer which thereby also acts as a server computer.

The invention is not restricted to the above described embodiments which can be varied in a number of ways within the scope of the claims.

## Claims

1. Method for publishing numerical data in a computer network, wherein a numerical data server offers a plurality of numerical data items which can be obtained through the network, characterized in that a unique address (UA) is assigned to each data item, said UA providing a hyperlink to the numerical data server, wherein the UA is distributed through the network.

2. Method according to claim 1, wherein a time index is added to the UA, wherein the numerical data server provides the numerical data item value or values in accordance with the time index.

3. Method according to claim 2, wherein the time index includes sub-index indicating a refresh interval for the numerical data item.

4. Method according to claim 2 or 3, wherein the time index includes a sub-index indicating a delay time.

5. Method according to any one of the preceding claims, wherein a type attribute is added to the numerical data item or the UA, said type attribute providing type information on the associated numerical data item.

6. Method according to claim 5, wherein one UA refers to a plurality of different related numerical data items, each data item having a different type attribute.

7. Method according to any one of the preceding claims, wherein a life time is added to the data item, said life time indicating the life time during which the associated data item is up-to-date.

8. Method according to any one of the preceding claims, wherein a time stamp is added to the numerical data item, said time stamp indicating the time of birth of the associated the numerical data item.

9. Method according to any one of the preceding claims, wherein an authentication is added to the numerical data item, said authentication being encrypted, for example by means of a public key algorithm.

10. Method for representing numerical data items in an application object, such as a web page, a document, a database, a spreadsheet or the like, in a computer which can be connected to a computer network, the network comprising a plurality of servers and clients, at least one of the servers operating as a numerical data server, characterized in that a numerical data item is represented by a hyperlink to a numerical data server, wherein a server or client is adapted to retrieve the associated numerical data item from the numerical data server through the network when using the application object.

11. Method according to claim 10, wherein the numerical data item is periodically downloaded from the numerical data server.

12. Method according to claim 10, wherein the numerical data item includes a lifetime, wherein the server or client refreshes the numerical data item as soon as the life time has expired.

13. Method according to claim 10, wherein a refresh interval is added to the numerical data item and wherein the numerical data item is refreshed after each expiry of the interval.

14. Method according to any one of claims 10-13, wherein a time index is added to the UA, wherein the time index can be set to retrieve a predetermined single value or an array of values of the corresponding numerical data item.

15. Method according to any one of claims 10-14, wherein a type attribute is added to each numerical data item and wherein the application object includes at least one arithmetical operation on one or more of the numerical data items, wherein the type attribute of the numerical data item(s) involved is checked for mutual compliance and compliance with the arithmetic operation(s).
